# EUROPÄISCHE PATENTSCHRIFT

(11) **EP 2 267 883 B1**
(45) Veröffentlichungstag und Bekanntmachung des Hinweises auf die Patenterteilung: **04.01.2012**
(21) Anmeldenummer: 10166480.3
(22) Anmeldetag: 18.06.2010
(51) Int. Cl.: H02P 6/00, H02P 6/08, H02P 25/02, H02M 1/42

(54) **Verfahren und Steuersystem zum Ansteuern eines bürstenlosen Elektromotors**
Method and control system for controlling a brushless electric motor
Méthode et système de contrôle pour contrôler un moteur électrique sans balais

(30) Priorität: 24.06.2009 EP 09163651
(43) Veröffentlichungstag der Anmeldung: 29.12.2010
(73) Patentinhaber: ebm-papst Mulfingen GmbH & Co. KG, 74673 Mulfingen (DE)
(72) Erfinder: Wystup, Ralph, 74653, Künzelsau (DE); Lipp, Helmut, 74677, Dörzbach-Hohebach (DE)
(74) Vertreter: Patentanwälte Dr. Solf & Zapf

(56) Entgegenhaltungen:
- EP-A2- 0 869 605
- JP-A- 57 177 292
- US-A- 4 855 652
- US-A1- 2002 089 303

## Beschreibung

Die vorliegende Erfindung betrifft zunächst gemäß dem Oberbegriff des Anspruchs 1 ein Verfahren zum Ansteuern eines bürstenlosen, elektronisch kommutierten, dreisträngigen Elektromotors, wobei eine Netzwechselspannung gleichgerichtet und über einen schlanken Zwischenkreis mit minimaler Zwischenkreis-Reaktanz als Zwischenkreisspannung einem Wechselrichter zugeführt wird, der zur Speisung und Kommutierung des Elektromotors ansteuerbar ist.

Ferner betrifft die Erfindung gemäß dem Oberbegriff des Anspruchs 4 auch ein entsprechendes Steuersystem, insbesondere unter Anwendung des erfindungsgemäßen Verfahrens, mit einem Netzgleichrichter, einem nachgeschalteten schlanken Zwischenkreis mit minimaler Zwischenkreis-Reaktanz sowie mit einem über den Zwischenkreis gespeisten und zur Kommutierung des Elektromotors ansteuerbaren Wechselrichter.

Elektronisch kommutierte Motoren, so genannte EC-Motoren, werden häufig als Lüfterantriebe eingesetzt. Diese Antriebe bestehen im Allgemeinen aus einem permanentmagneterregten Synchronmotor (PMSM) mit integrierter Leistungs- und Signalelektronik. Hierbei handelt es sich häufig um Außenläufermotoren.

Solche Elektromotoren können an einer einphasigen oder dreiphasigen Netzwechselspannung betrieben werden, indem die Netzwechselspannung zunächst zu einer Zwischenkreisspannung gleichgerichtet wird, die dann über einen gesteuerten Wechselrichter in eine Motor-Betriebsspannung zur Versorgung und Kommutierung des Motors umgesetzt wird.

Um ein möglichst gleichförmiges, konstantes Motor-Drehmoment mit minimaler Welligkeit und dadurch ein günstiges Geräuschverhalten (insbesondere bei Lüfter-Antrieben) zu erreichen, sollte die Zwischenkreisspannung eine möglichst konstante Gleichspannung sein. Dazu wurde bisher die über einen Netzgleichrichter gleichgerichtete und stark pulsierende Gleichspannung über mindestens einen Glättungskondensator und gegebenenfalls eine zusätzliche Siebdrossel geglättet. Der Glättungskondensator muss dazu eigentlich eine relativ große Kapazität (z. B. mehrere Hundert µF) aufweisen, so dass üblicherweise Elektrolytkondensatoren (Elkos) eingesetzt wurden. Diese haben aber im praktischen Einsatz einige Nachteile, und zwar insbesondere ein großes Bauvolumen und eine geringe Lebensdauer.

Deshalb besteht heute zunehmend die Tendenz, entweder gänzlich auf Glättungskondensatoren oder zumindest auf Elektrolytkondensatoren zu verzichten, wobei im zweiten Fall längerlebige Folienkondensatoren mit geringerer Kapazität (nur bis zu einigen µF) eingesetzt werden. Hierbei wird von einem "schlanken Zwischenkreis" gesprochen, wobei auf eine Entkoppelung von Netz- und Motorseite durch Speicherbauteile, wie Kondensatoren und Drosseln (Reaktanzen), ganz oder zumindest weitgehend verzichtet wird. Dies bedeutet, dass ein schlanker Zwischenkreis keine oder nur eine minimale Zwischenkreis-Reaktanz enthält.

Mit dieser Technologie des "schlanken Zwischenkreises" treten vor allem bei Versorgung aus dem einphasigen Netz besondere Probleme auf, weil die gleichgerichtete Gleichspannung sehr stark mit einer Frequenz von 100 Hz pulsiert, deren Spannungsverlauf dem Betrag der sinusförmigen Netzwechselspannung entspricht. Würde nun ein EC-Motor (PMSM) direkt mit einer solchen stark pulsierenden Gleichspannung versorgt, so könnte unterhalb einer bestimmten Grenzspannung kein Motorstrom in den Motorwicklungen eingeprägt werden. Die Konsequenz wäre ein Absinken des Drehmomentes.

Um das Drehmoment trotz der welligen Zwischenkreis-Gleichspannung möglichst konstant zu halten, sind einige Möglichkeiten bekannt.

So kann das Drehmoment durch eine Stromregelung konstant gehalten werden. Nachteilig ist hierbei, dass dazu die Motorströme erfasst werden müssen, und dass eine zu schnelle Stromregelung ein System aus Netzinduktivität und Zwischenkreiskondensator zum Schwingen anregen kann. Die Folge wäre eine noch stärker pulsierende Zwischenkreisspannung.

Es ist weiterhin bekannt (vgl. beispielsweise die Literaturstelle "Verlustarmer Umrichter ohne Zwischenkreis-Kondensator" von B. Piepenbreier und L. Sack in "Elektronik 2006 Nr. 1", Seiten 61 bis 67), in Kombination mit dem Wechselrichter des EC-Motors gesteuerte Gleichrichter einzusetzen. Realisiert wird dies konkret durch spezielle Matrixumrichter mit gesteuerten Gleichrichtern. Der Nachteil dieser-grundsätzlich gut funktionierenden - Anordnung sind Mehrkosten durch die zusätzlichen steuerbaren Halbleiter, welche sich besonders bei großen Stückzahlen sehr bemerkbar machen.

Das Dokument JP 57 177292 A betrifft eine Drehzahlsteuerung für einen kollektorlosen Gleichstrommotor, wobei in einem Zwischenkreis ein Hochsetzsteller (step-up chopper) sowie auch ein Tiefsetzsteller (step-down chopper) angeordnet sind, um die pulsierende Gleichspannung zu vergleichmäßigen. Dazu wird die Spannung in Zeiten um die Spitzenspannung reduziert und in Zeiten um den Nullwert erhöht. Dieses Dokument beschäftigt sich nur mit der Drehzahlsteuerung und nicht mit der Technologie eines "schlanken Zwischenkreises", zumal im Zwischenkreis ein Glättungskondensator und eine zusätzliche Induktivität vorgesehen sind, so dass nicht von einem "schlanken Zwischenkreis" gesprochen werden kann.

Ähnliches gilt auch für das Dokument US 4 855 652 A, wonach ebenfalls im Zwischenkreis ein Hochsetzsteller (step-up chopper circuit) mit einer zusätzlichen Induktivität vorgesehen ist.

Weiterhin beschreibt auch die Veröffentlichung US 2002/0089303 A1 eine Treiberschaltung für einen elektronisch kommutierten Motor mit einem Hochsetzsteller für eine gleichgerichtete, pulsierende Spannung, wobei der Hochsetzsteller - dort "energy return stage" genannt - aus einem Kondensator, einem Schaltelement und einer Reihenschaltung einer Induktivität mit einer Diode besteht. Auch hier ist somit nicht die spezielle Thematik eines "schlanken Zwischenkreises" angesprochen.

Das Dokument EP 0 869 605 A2 beschreibt ein Verfahren zur Reduzierung von Rückwirkungen auf den zeitlichen Verlauf des einem Netz entnommenen Stroms bei Betrieb einer induktiven Last, und zwar über einen Gleichrichter mittels aktiver Filterung der Harmonischen einer Netzgrundschwingung über einen Boostkonverter. Ferner offenbart das Dokument eine Vorrichtung zum Antreiben von Motoren nach diesem Verfahren. Die Aufgabe soll darin bestehen, bei Betrieb einer induktiven Last über einen Gleichrichter unerwünschte Rückwirkungen auf den zeitlichen Verlauf des dem Netz entnommenen Stroms sicher zu verhindern, und zwar mit einer Filteranordnung mit geringem Aufwand und Gewicht. Dazu soll eine für den Boostkonverter notwendige Induktivität zumindest teilweise durch die induktive Last selbst ersetzt werden. Wenn die Last ein Motor ist, soll wenigstens eine Motorwicklung als Induktivität für den Boostkonverter verwendet werden. Allerdings sind dabei Kondensatoren offenbart, die nach üblicher Darstellung in Schaltplänen als Elektrolytkondensatoren zu werten sind. Bei den in diesem Dokument offenbarten Schaltungen handelt es sich somit nicht um eine Motoransteuerung mit einem schlanken Zwischenkreis". Zudem sind alle offenbarten Schaltungstopologien nicht für einen dreisträngigen Motor anwendbar.

Der vorliegenden Erfindung liegt die Aufgabe zu Grunde, auf eine technisch günstige Weise und mit einfachen und kostengünstig realisierbaren Mitteln den Betrieb eines elektronisch kommutierten Elektromotors (EC-Motors) speziell mit "schlankem Zwischenkreis" zu optimieren.

Erfindungsgemäß wird dies durch ein Verfahren gemäß Anspruch 1 erreicht. Ein zur Anwendung des Verfahrens geeignetes Steuersystem ist Gegenstand des Anspruchs 4. Vorteilhafte Ausgestaltungen der Erfindung sind in den abhängigen Ansprüchen sowie in der nachfolgenden Beschreibung enthalten.

Erfindungsgemäß wird demnach die zunächst durch Gleichrichten der Netzwechselspannung erzeugte, pulsierende, d. h. über die Zeit nicht konstante Gleichspannung unter Verwendung eines Hochsetzstellers bezüglich ihrer Augenblickswerte derart dynamisch erhöht, dass die daraus resultierende Zwischenkreisspannung über ihren zeitlichen Verlauf hinweg mit reduzierter Welligkeit stets oberhalb einer bestimmten Grenzspannung liegt. Als Grenzspannung wird diejenige Spannung vorgegeben, die bei dem jeweiligen Elektromotor ausreicht, über den Wechselrichter über den gesamten Phasenverlauf hinweg stets einen Motorstrom in die Wicklungen einzuprägen. Bei geeigneter Auslegung des Hochsetzstellers und dessen Steuerung kann vorteilhafterweise aus der stark pulsierenden Gleichspannung eine quasikonstante Gleichspannung erzeugt werden. Dazu wird die pulsierende Gleichspannung mit einem anhand der jeweils aktuellen Zwischenkreisspannung geregelten Taktverhältnis getaktet auf eine Induktivität geschaltet, und über eine der

Induktivität nachgeschaltete Freilaufdiode und einen Zwischenkreiskondensator wird die Zwischenkreisspannung aufsummiert. Für den Zwischenkreiskondensator genügt ein kleiner und kostengünstiger Folienkondensator, in der Größe von nur einigen µF.

Da die für die Funktion des Hochsetzstellers erforderliche Induktivität eigentlich der "Philosophie eines schlanken Zwischenkreises" widerspricht, ist gemäß der Erfindung weiterhin vorgesehen, dass als Induktivität für den Hochsetzsteller im Elektromotor ohnehin zwangsläufig vorhandene Streuinduktivitäten von Motor-Wickelköpfen genutzt werden. Auf diese Weise kann innerhalb des schlanken Zwischenkreises - im Gegensatz zu dem oben erläuterten Stand der Technik gemäß JP 57 177292 A, US 4 855 652 A bzw. US 2002/0089303 A1 - vorteilhafterweise eine zusätzliche Induktivität entfallen. Um für den Hochsetzsteller die Streuinduktivitäten des Motors nutzen zu können, wird nur in Phasen der Kommutierungssteuerung des Wechselrichters ein Hochsetzsteller-Betrieb durchgeführt, in denen alle Wicklungen des Elektromotors kurzgeschlossen sind. In den übrigen, verbleibenden Phasen der Kommutierungssteuerung erfolgt eine übliche Ansteuerung zur Drehmomenterzeugung durch Raumzeigermodulation zur Erzeugung eines Drehfeldes.

Ein erfindungsgemäßes Steuersystem besteht zunächst aus den für eine EC-Steuerung üblichen Bestandteilen, und zwar einem Netzgleichrichter und einem über einen Zwischenkreis nachgeschalteten Wechselrichter, der zur Erzeugung von quasisinusförmig verlaufenden Motorströmen zur entsprechenden Spannungstaktung (Modulation) von einer PWM-Steuerung angesteuert wird. Erfindungsgemäß weist das Steuersystem nun einen integrierten Hochsetzsteller mit einer derart ausgelegten Steuerung auf, dass im Sinne des erfindungsgemäßen Verfahrens eine über den Netzgleichrichter gleichgerichtete, pulsierende Gleichspannung bezüglich ihrer Augenblickswerte derart dynamisch erhöht wird, dass eine daraus resultierende Zwischenkreisspannung über ihren zeitlichen Verlauf hinweg mit reduzierter Welligkeit stets oberhalb einer bestimmten Grenzspannung liegt. Der Hochsetzsteller weist eine Induktivität in Reihe mit einer Freilaufdiode und mit einem nachgeschalteten Zwischenkreis-Kondensator auf, wobei die Induktivität über einen steuerbaren elektronischen Schalter getaktet mit der pulsierenden Gleichspannung beaufschlagbar ist. Dabei wird der elektronische Schalter zur Taktung der Induktivität pulsweitenmoduliert von einem Spannungsregler mit variabler Taktfrequenz angesteuert, und zwar in Abhängigkeit von der jeweils aktuellen Zwischenkreisspannung sowie in Abhängigkeit von der vorbestimmten Grenzspannung. Dabei aktiviert die Steuerung den Hochsetzsteller nur in Phasen der Kommutierung, in denen alle Wicklungen des Elektromotors kurzgeschlossen sind. Dadurch können vorhandene Streuinduktivitäten von Motor-Wickelköpfen als Induktivität für den Hochsetzsteller verwendet werden.

Die erfindungsgemäß als Hochsetzsteller-Induktivität genutzten Wickelkopf-Streuinduktivitäten sind hinsichtlich der Größe ihrer wirksamen Induktivität zunächst abhängig von der Auslegung des jeweiligen Elektromotors bzw. seines Stators und seiner Statorwicklungen. In einer vorteilhaften Weiterbildung der Erfindung können allerdings die Streuinduktivitäten der Motor-Wickelköpfe durch zusätzliche Maßnahmen hinsichtlich ihrer wirksamen Induktivität beeinflusst, und zwar verringert oder erhöht werden. Dazu können zumindest auf einer Axialseite des Motors bzw. Stators im Wickelkopf-Bereich magnetisch wirksame Mittel mit hoher oder niedriger magnetischer Permeabilität vorgesehen sein, um die eigentlich nur vorhandene Luftspalt-Permeabilität und den magnetischen Streufluss zu beeinflussen. Einige konkrete Ausführungsbeispiele für diese Maßnahme werden weiter unten noch genauer beschrieben werden.

Anhand der Zeichnungen soll die Erfindung im Folgenden beispielhaft genauer erläutert werden. Dabei zeigen:
- Fig. 1: ein Schaltbild eines Steuersystems mit integriertem Hochsetzsteller,
- Fig. 2: ein Spannungsdiagramm zur Funktionsbeschreibung,
- Fig. 3: ein vereinfachtes Schaltbild zur Erläuterung der Hochsetzsteller-Funktion,
- Fig. 4: ein Schaltbild einer erfindungsgemäßen Ausführung des Steuersystems,
- Fig. 5: Ersatzschaltbilder einer dreisträngigen Motorwicklung in einem kurzgeschlossenen Zustand,
- Fig. 6: ein Prinzipschaltbild eines Wechselrichters in einer Ersatz-Umschalter- Darstellung,
- Fig. 7: eine Tabelle mit Schalterzuständen zur Kommutierung des Elektromotors durch Raumzeigermodulation zur Drehfeldbildung,
- Fig. 8: ein Diagramm zur Darstellung von Raumzeigern aus Fig. 7 im statorfesten kartesischen Koordinatensystem,
- Fig. 9: ein Diagramm wie in Fig. 8 zur weiteren Erläuterung der Bildung eines kreisförmig umlaufenden Raumzeigers,
- Fig. 10: ein Steuerdiagramm einer möglichen Schaltsequenz für einen Raumzeiger,
- Fig. 11: ein gegenüber Fig. 4 stark vereinfachtes Schaltbild des erfindungsgemäßen Steuersystems im Hochsetzsteller-Modus (Kurzschluss-Phase der Wicklungen),
- Fig. 12-27: beispielhafte Ansichten zur Erläuterung von möglichen Zusatzmaßnahmen zur Beeinflussung der Wickelkopf-Streuinduktivitäten, und zwar:

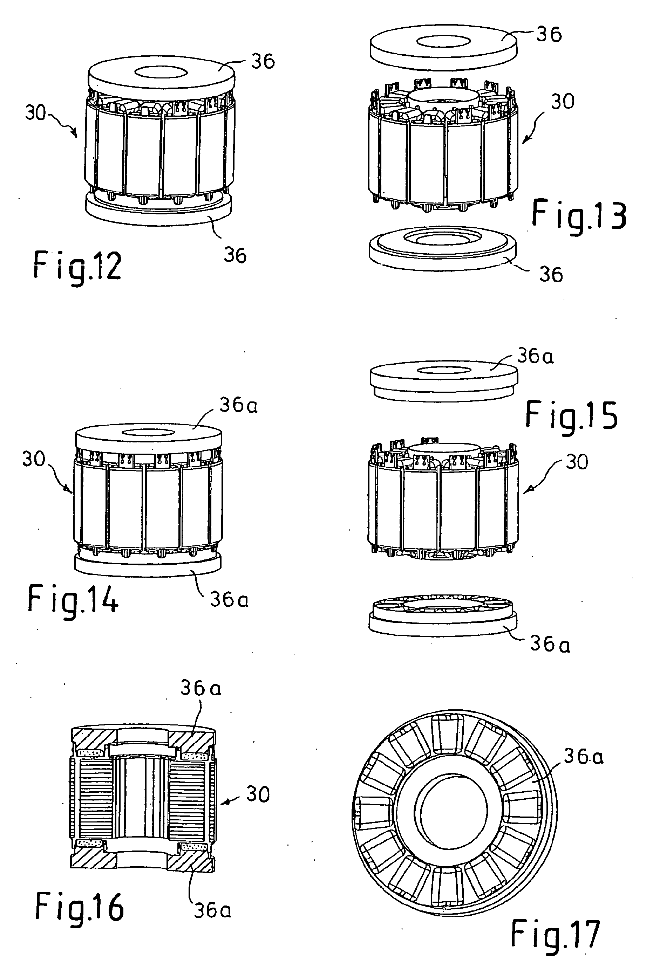

Fig. 12 eine schematische Perspektivansicht eines Stators des Elektromotors in einer ersten Ausführung zur Beeinflussung der Wickelkopf-Streuinduktivitäten,
Fig. 13 eine Explosionsdarstellung zu Fig. 12,
Fig. 14 eine Alternative zu Fig. 12,
Fig. 15 eine Explosionsansicht zu Fig. 14,
Fig. 16 einen diametralen Axialschnitt durch den Stator gemäß Fig. 14,
Fig. 17 eine Ansicht auf eine Innenseite eines Bestandteils der Ausführungen gemäß Fig. 14 bis 16,

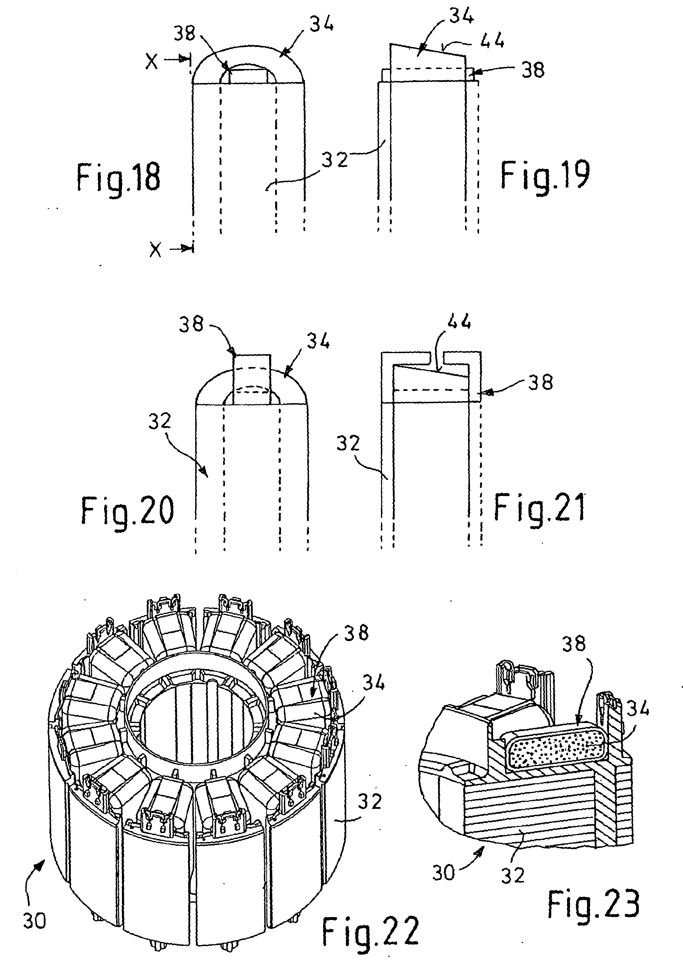

Fig. 18 eine schematische Seitenansicht mit Blickrichtung radial von außen auf den Stator im Bereich einer der Statorwicklungen,
Fig. 19 eine Ansicht X-X gemäß Fig. 18,
Fig. 20, 21 Ansichten analog zu Fig. 18 und 19 in einer Weiterbildung,
Fig. 22 eine Perspektivansicht des Stators in der Ausführung entsprechend Fig. 20 und 21 und
Fig. 23 eine radial geschnittene und vergrößerte Detailansicht zu Fig. 22 und

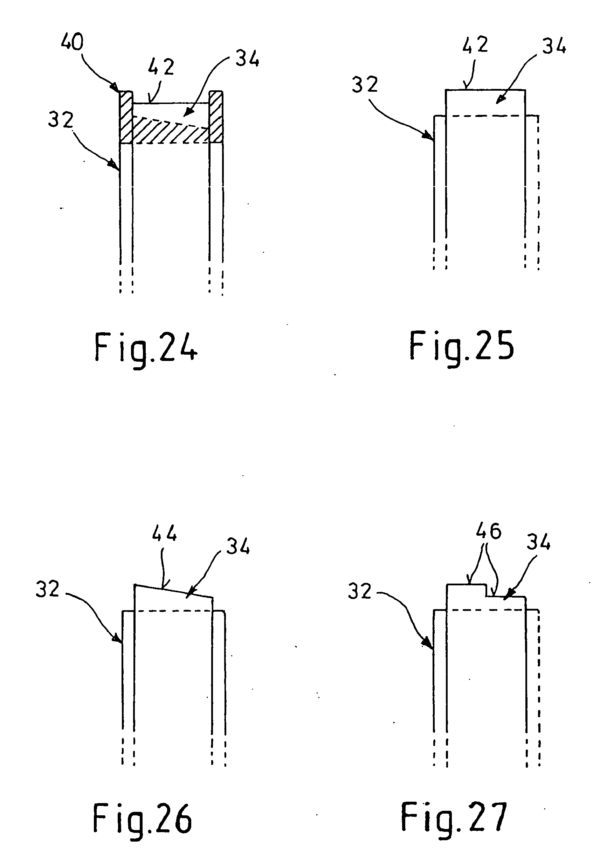

Fig. 24-27 jeweils einen schematischen Radialschnitt durch den Wickelkopf im Bereich einer der Statorwicklungen in verschiedenen Ausführungen.

In den verschiedenen Figuren der Zeichnung sind gleiche Teile, Komponenten und Größen stets mit den gleichen Bezugszeichen versehen.

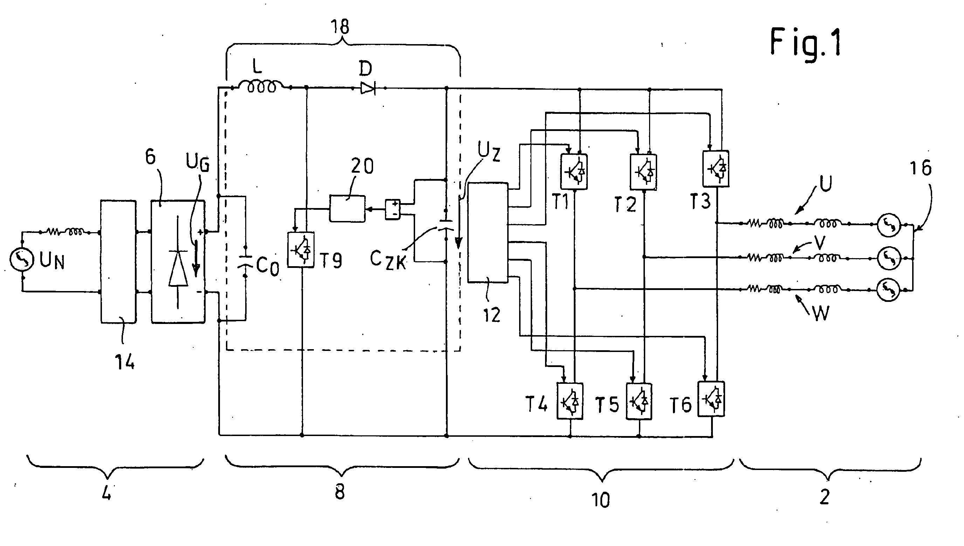

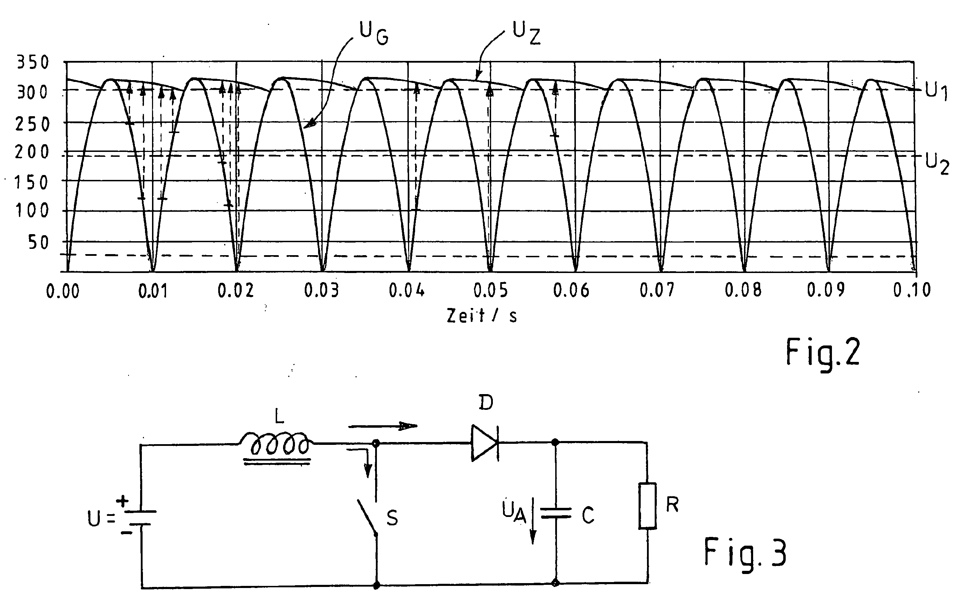

Wie sich zunächst aus Fig. 1 ergibt, besteht ein Steuersystem zum Ansteuern eines kollektorlosen, elektronisch kommutierten Elektromotors 2 (EC-PMSM = Elektronisch kommutierter permanentmagneterregter Synchronmotor) aus einer Netzspannungsversorgung 4, die eine Netzwechselspannung U_{N} über einen Netzgleichrichter 6 zu einer pulsierenden Gleichspannung U_{G} gleichrichtet (vgl. dazu das Diagramm in Fig. 2). Die Netzspannungsversorgung 4 versorgt über einen Zwischenkreis 8 einen gesteuerten Wechselrichter 10 (Leistungsendstufe), der in an sich bekannter Weise von einer Steuereinheit 12 zur Speisung und Kommutierung sowie insbesondere auch zur Drehzahleinstellung des Motors 2 gesteuert wird.

In Fig. 1 ist im Bereich der Netzspannungsversorgung 4 zusätzlich ein Netzfilter 14 eingezeichnet, das hochfrequente Stromschwingungen reduziert und somit die elektromagnetische Verträglichkeit (EMV) verbessert. Von dem - bevorzugt dreisträngigen - Elektromotor 2 sind nur drei Stator-Wicklungsstränge U, V, W in Ersatzschaltbild-Darstellung gezeigt, wobei hier eine Sternschaltung mit einem gemeinsamen Sternpunkt 16 vorgesehen ist. Sonstige Bestandteile des Elektromotors 2, wie sein permanentmagnetischer Rotor, sind in den Zeichnungen zur Vereinfachung nicht dargestellt. Der Wechselrichter 10 besteht aus einer Brückenschaltung (Drehstrom-Vollbrücke) mit sechs elektronischen Schaltern T1 bis T6.

Erfindungsgemäß weist nun das Steuersystem einen in den Zwischenkreis 8 integrierten Hochsetzsteller 18 auf (häufig auch Aufwärtswandler genannt), der die stark pulsierende Gleichspannung U_{G} in eine nahezu konstante, allenfalls eine geringfügige Rest-Welligkeit aufweisende Zwischenkreisspannung U_{Z} zur Versorgung des Wechselrichters 10 umformt (s. Fig. 2). Dazu wird die pulsierende Gleichspannung U_{G} bezüglich ihrer Augenblickswerte derart dynamisch über den Hochsetzsteller 18 erhöht (in Fig. 2 durch einige gestrichelte Pfeile angedeutet), dass die daraus resultierende Zwischenkreisspannung U_{Z} über ihren zeitlichen Verlauf hinweg mit reduzierter Welligkeit stets oberhalb einer bestimmten Grenzspannung liegt. In Fig. 2 sind beispielhaft zwei verschiedene Grenzspannungen U₁ und U₂ durch gestrichelte Geraden eingezeichnet. Die jeweilige Grenzspannung wird motorspezifisch vorgegeben; es handelt sich um diejenige Spannung, die mindestens erforderlich ist, um über die Zeit hinweg stets einen Motorstrom im Motor 2 einzuprägen.

Das allgemeine Funktionsprinzip eines Hochsetzstellers bzw. Aufwärtswandlers soll anhand der Fig. 3 erläutert werden. Grundsätzlich handelt es sich um einen Gleichspannungswandler, der eine Gleichspannung U₌ in eine höhere Ausgangsspannung U_{A} umformen kann. Dazu ist eine Induktivität L (Spule) in Reihe mit einer Freilaufdiode D geschaltet, hinter der ein Ladekondensator C die Ausgangsspannung U_{A} aufsummiert. Die Induktivität L wird dazu über einen Schalter S mit einer bestimmten Taktfrequenz alternierend an die Gleichspannung U₌ geschaltet, wobei jeweils Energie in der Induktivität L gespeichert wird. Wird der Schalter S jeweils geöffnet, hält die Induktivität L den Stromfluss aufrecht, so dass über die Diode D der Ladekondensator C auf die Ausgangsspannung U_{A} zur Versorgung einer Last R geladen wird.

Im Falle des erfindungsgemäßen Steuersystems und seines integrierten Hochsetzstellers 18 ist allerdings über das allgemeine Funktionsprinzip hinausgehend vorgesehen, dass der hier vorhandene elektronische Schalter T9 auf eine besondere Weise von einem Spannungsregler 20 gesteuert wird, und zwar mit einer hinsichtlich der Taktfrequenz veränderbaren PWM-Taktung, wobei die Taktfrequenz in Abhängigkeit von dem zeitlich nicht konstanten Verlauf der pulsierenden Gleichspannung U_{G} und von dem jeweils erfassten Ist-Wert der Zwischenkreisspannung U_{Z} sowie von der vorgegebenen Grenzspannung U₁ bzw. U₂ dynamisch so gesteuert wird, dass die pulsierende Gleichspannung U_{G} bezüglich ihrer Augenblickswerte jeweils dynamisch so angehoben wird, dass die resultierende Zwischenkreisspannung U_{Z} stets oberhalb der jeweiligen Grenzspannung U₁/U₂ liegt.

Zur aufsummierenden Speicherung der Zwischenkreisspannung U_{Z} ist hinter der Freilaufdiode D ein Zwischenkreiskondensator C_{Zk} angeordnet. Bevorzugt liegt zusätzlich unmittelbar hinter dem Netzgleichrichter 6 ein zweiter Kondensator C₀. Die beiden parallelen Kapazitäten C₀ und C_{Zk} im Steuersystem mit Hochsetzsteller 18 sind allerdings in der Summe deutlich kleiner als eine Kapazität, die notwendig wäre, um die Zwischenkreisspannung U_{Z} ohne den erfindungsgemäßen Hochsetzsteller 18 oberhalb der jeweiligen Grenzspannung U₁/U₂ zu halten. Die Kapazität C₀ am Ausgang des Netzgleichrichters 6 dient zur besseren Regelbarkeit des Hochsetzstellers 18, und sie liegt im Bereich von nur wenigen µF.

Bei der Ausführung gemäß Fig. 1 wird durch die zusätzliche, im Zwischenkreis 8 liegende Induktivität L die Reaktanz im Zwischenkreis 8 erhöht. Dies steht eigentlich im Gegensatz zu dem grundsätzlich angestrebten "schlanken Zwischenkreis", der eine möglichst geringe Reaktanz enthalten soll.

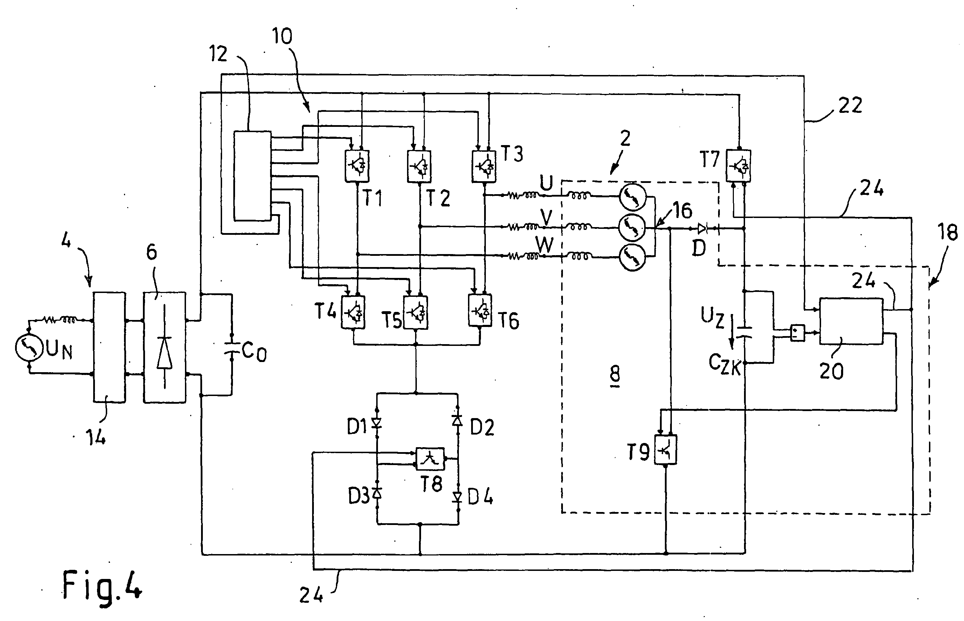

Deshalb ist gemäß Fig. 4 erfindungsgemäß vorgesehen, den Hochsetzsteller 18 mit den ohnehin im Motor 2 vorhandenen Streuinduktivitäten der Wickelköpfe der Motorwicklungen zu realisieren. Dadurch können vorteilhafterweise zusätzliche Induktivitäten im Zwischenkreis 8 entfallen, wodurch die Zwischenkreis-Reaktanz vorteilhaft gering gehalten werden kann.

Der allgemeine Ansatz für diese erfindungsgemäße Ausgestaltung kann so definiert werden, dass magnetische Energie in den Streuinduktivitäten der Wickelköpfe des Stators gespeichert wird, um diese zum Hochsetzen der Zwischenkreisspannung U_{Z} zu verwenden.

Diese Ausgestaltung sowie die technischen Hintergründe sollen nun anhand der Figuren 4 bis 11 genauer erläutert werden.

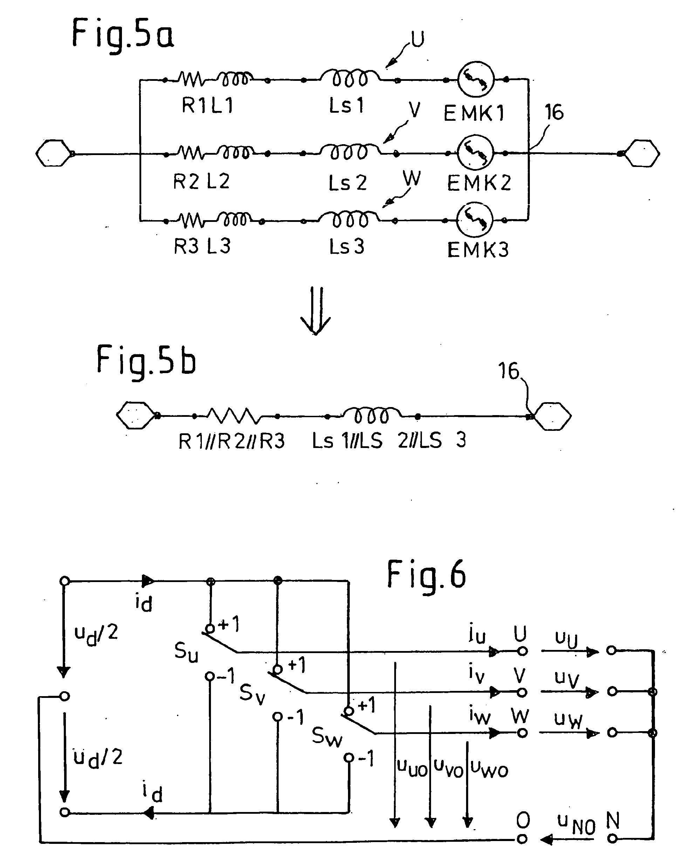

Der dreisträngige Elektromotor 2 ist in Fig. 4 (sowie auch in Fig. 1) als Ersatzschaltbild mit seinen Wicklungsimpedanzen R1, L1, Ls1 bis R3, L3, Ls3 sowie mit den induzierten EMK's EMK1 bis EMK3 dargestellt. Die Wicklungsinduktivitäten teilen sich jeweils in einen symmetrischen Anteil L1 bis L3 und einen unsymmetrischen Anteil Ls1 bis Ls3 auf. Werden die Wicklungsstränge mit ihren Klemmen kurzgeschlossen, kann gegen den Sternpunkt 16 nur der unsymmetrische Anteil der parallel geschalteten Wicklungsinduktivitäten - hauptsächlich verursacht durch die Streuinduktivitäten der Wickelköpfe - gemessen werden. Die symmetrischen Induktivitäten entfallen, da sich ihre magnetischen Flüsse im Falle eines Klemmen-Kurzschlusses gegenseitig aufheben. Dieser Sachverhalt ist in Fig. 5 dargestellt. Fig. 5a zeigt alle drei Wicklungsstränge U, V, W mit ihren anteiligen Impedanzen und EMK's. Durch Kurzschluss der Wicklungsstränge entsteht effektiv das in Fig. 5b dargestellte Ersatzschaltbild, wobei nur noch die Ohmschen Anteile R1 bis R3 sowie die Streuinduktivitäten Ls1 bis Ls3 wirksam sind. Die übrigen Anteile heben sich gegenseitig auf.

Erfindungsgemäß soll nun der Anteil der Streuinduktivitäten Ls1 bis Ls3 gemäß Fig. 5b als Induktivität L für den Hochsetzsteller 18 verwendet werden.

Dazu ist erfindungsgemäß vorgesehen, den Hochsetzsteller 18 nur in Phasen der Kommutierungssteuerung des Wechselrichters 10 zu betreiben, in denen über die entsprechenden Schalter T1 bis T6 des Wechselrichters 10 alle Wicklungsstränge U, V, W des Elektromotors 2 kurzgeschlossen sind. In den übrigen, verbleibenden Phasen der Kommutierungssteuerung erfolgt dann eine übliche Ansteuerung des Wechselrichters 10 zur Drehmomenterzeugung durch eine übliche Raumzeigermodulation zur Erzeugung eines Drehfeldes.

Um diese in sich verschachtelten Betriebsphasen vorzusehen, kann das Steuersystem gemäß dem in Fig. 4 dargestellten Ausführungsbeispiel ausgeführt sein. Im Vergleich zu der Ausführungsform gemäß Fig. 1 ist gemäß Fig. 4 zusätzlich vorgesehen, dass die Steuereinheit 12 des Wechselrichters 10 über eine zusätzliche Steuerleitung 22 den Spannungsregler 20 des Hochsetzstellers 18 in den Kommutierungsphasen aktiviert, in denen die Wicklungsstränge U, V, W kurzgeschlossen sind. In diesen Phasen wird dann zusätzlich der Wechselrichter 10 über einen Schalter T7 von dem Zwischenkreis 8 getrennt. Bei der dargestellten Ausführung wird zudem auch der Wechselrichter 10 - wegen der zu den von Bipolartransistoren gebildeten Schaltern T4 bis T6 parallelen Freilaufdioden - über einen Schalter T8 von Masse getrennt. Der Schalter T8 ist als unipolarer Schalter ausgeführt. Bei der dargestellten Ausführung ist als Schalter T8 ein üblicher Bipolartransistor mit einer Dioden-Brücke D1 bis D4 vorgesehen. Diese spezielle Beschaltung kann entfallen, wenn an dieser Stelle unmittelbar ein unipolarer Schalter ohne Freilaufdioden eingesetzt wird, insbesondere ein FET. Zudem könnte der Schalter T8 auch gänzlich entfallen, wenn für die "unteren" Schalter T4 bis T6 des Wechselrichters 10 unmittelbar unipolare Schalter (wie FET's) eingesetzt werden. Für den normalen Kommutierungsbetrieb wird dann der Spannungsregler 20 für den Hochsetzsteller 18 über die Steuerleitung 22 deaktiviert, und es wird die Zwischenkreisspannung des Zwischenkreiskondensators C_{Zk} über den Schalter T7 und gegebenenfalls den Schalter T8 auf den Wechselrichter 10 geschaltet. Die Schalter T7 und gegebenenfalls T8 werden bevorzugt von dem Spannungsregler 20 je nach dessen Betriebszustand über eine Steuerverbindung 24 gesteuert.

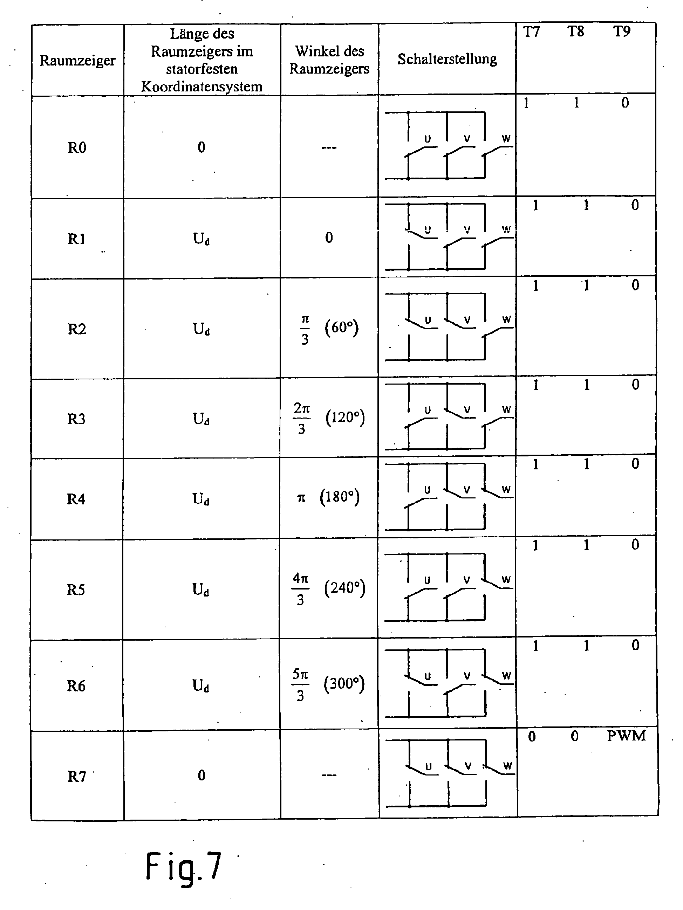

Der Vollständigkeit halber sei nun die Funktionsweise der üblichen Kommutierungssteuerung durch Raumzeigermodulation erläutert, welche zur Erzeugung eines dreiphasigen Drehfeldsystems dient, um den Elektromotor 2 bzw. dessen Rotor in Rotation zu versetzen. Dazu sind in Fig. 6 die Schalter T1 bis T6 aus Fig. 4 durch Umschalter Su, Sv, Sw ersetzt. Diese Umschalter und die zusätzlichen Schalter (Transistoren) T7 bis T9 gemäß Fig. 4 können die Zustände gemäß Fig. 7 annehmen. Dadurch werden rotierende Spannungs-Raumzeiger R0 bis R7 erzeugt.

Werden die Schalterkombinationen gemäß R1 bis R6 der Reihe nach geschaltet, lässt sich mit Hilfe der räumlichen Anordnung der Wicklungsstränge ein so genannter Drehzeiger, welcher auch Raumzeiger genannt wird, für die Strangspannungen im statorfesten kartesischen Koordinatensystem bilden. Dieser Spannungsraumzeiger dreht sich zunächst sprungartig und ist die Ursache für einen Stromraumzeiger in den Motorwicklungen, welcher eine Drehdurchflutung bildet. Diese Drehdurchflutung bildet zusammen mit dem Drehfeld des Rotors das den Motor antreibende Luftspaltdrehmoment.

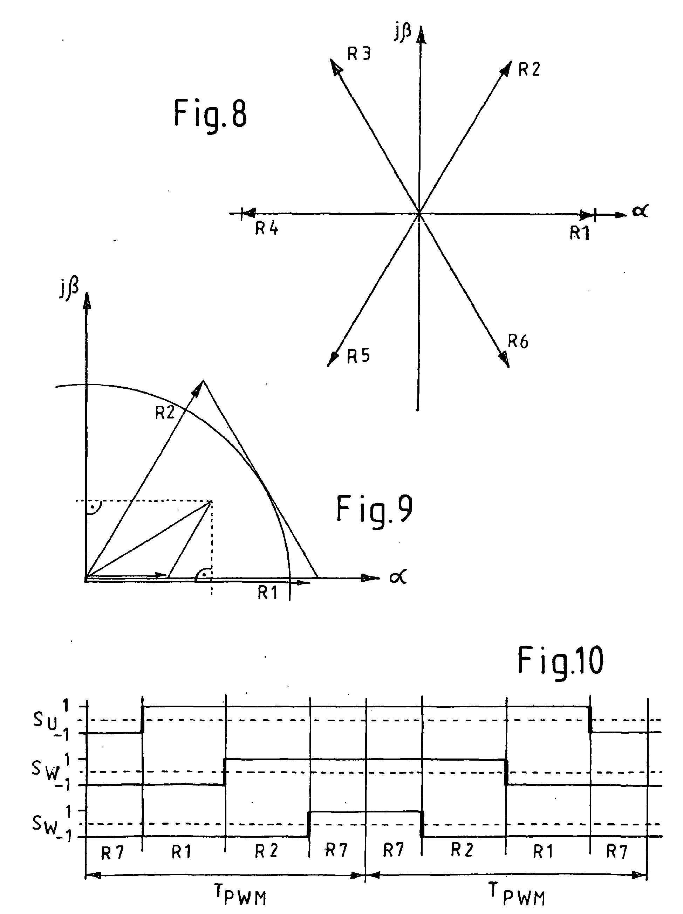

In Fig. 8 sind die entsprechenden Spannungsraumzeiger zu den Schalterzuständen R1 bis R6 gemäß Fig. 7 dargestellt. Die beiden Raumzeiger R0 und R7 gemäß Fig. 7 bilden kein Drehfeld und verlaufen in Fig. 8 senkrecht zur Zeichnungsebene durch den Ursprung des Koordinatensystems.

Da zu jedem Zeitpunkt immer nur ein Raumzeiger aktiv ist, entsteht durch das Schalten zunächst ein springender Raumzeiger, welcher ein sechseckförmiges Drehfeld (Verbindung aller Zeigerspitzen) verursacht, was zu einer unerwünschten Drehmomentwelligkeit führen würde.

Um ein konstantes Drehmoment zu erzeugen, muss der Raumzeiger kreisförmig ohne Sprünge umlaufen. Dies wird erreicht, indem aus jeweils zwei benachbarten Raumzeigern, den so genannten Elementarzeigern, ein resultierender Zeiger gebildet wird, welcher auf einer Kreisbahn umläuft. Die Bildung eines resultierenden Raumzeigers geschieht dadurch, dass die benachbarten Elementarzeiger schnell ein-und ausgeschaltet werden und sich somit im arithmetischen Mittel ein resultierender Raumzeiger bildet. Dieser Vorgang ist in Fig. 9 veranschaulicht. Eine typische Schaltsequenz zur Bildung eines umlaufenden Raumzeigers ist beispielhaft in Fig. 10 dargestellt.

Erfindungsgemäß wird nun für den Hochsetzsteller 18 nur der Nullzeiger R7 benötigt. Grundsätzlich könnte aber auch der Nullzeiger R0 zusätzlich oder alternativ verwendet werden.

Somit ist es vorteilhafterweise möglich, im Zeitintervall, in dem der Null-Raumzeiger R7 aktiv ist, zusätzliche Funktionen, wie insbesondere den Betrieb des Hochsetzstellers 18 zu integrieren, ohne die Erzeugung eines kreisförmigen Drehfeldes zu stören. Bedingung hierfür ist, dass alle Vorgänge, welche vom Hochsetzsteller 18 herrühren, insbesondere der Stromfluss durch die kurzgeschlossenen Motorwicklungen und die daraus herrührende magnetische Belastung, bis zum Einsetzen der drehfeldbildenden Raumzeigerzustände R1 bis R6 abgeklungen sind.

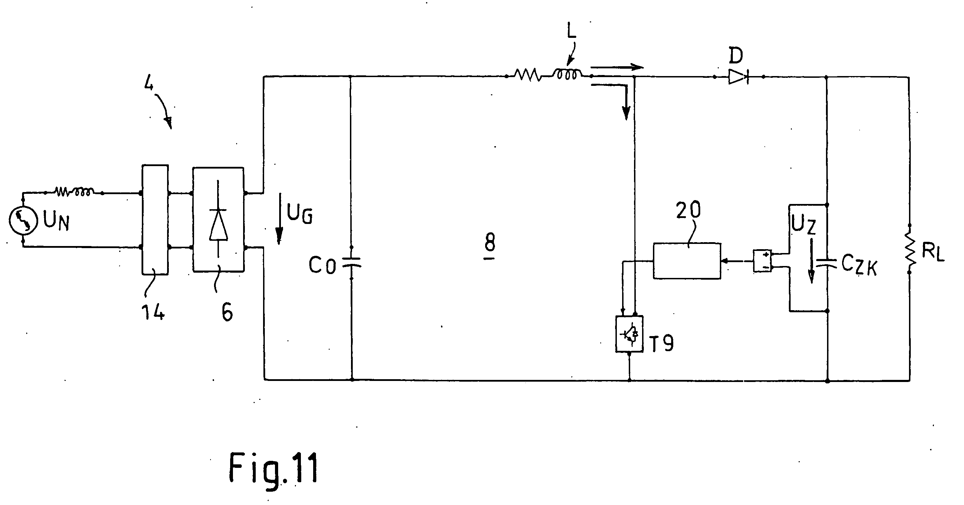

Um die Funktion des Hochsetzstellers 18 gemäß Fig. 4 im Raumzeigerzustand R7 zu verdeutlichen, ist die Schaltung in Fig. 11 in diesem Zustand gezeichnet. Zur Vereinfachung sind nur die in dieser Phase wirksamen Bestandteile dargestellt. Da die Schalter T7 und T8 in dieser Phase permanent ausgeschaltet sind, ist auch der Wechselrichter 10 mit den oberen und unteren Schaltern T1 bis T3 und T4 bis T6 vom Zwischenkreis 8 getrennt. Es liegt dann nur die Ersatzschaltung gemäß Fig. 5b der kurzgeschlossenen Wicklungen im Zwischenkreis 8 und bildet dadurch die Induktivität L für den Hochsetzsteller 18. Der Schalter T9 wird von dem Spannungsregler 20 in der oben bereits beschriebenen Weise PWM-getaktet angesteuert, so dass die Zwischenkreisspannung U_{Z} am Zwischenkreiskondensator C_{Zk} mittels des Hochsetzstellers 18 in einem gewissen Bereich geregelt werden kann. Der in Fig. 11 zusätzlich eingezeichnete Lastwiderstand R_{L} repräsentiert im Grunde den Motor, indem er den Kondensator C_{Zk} ähnlich belastet, wie der Motor in den drehfeldbildenden Raumzeigerzuständen R1 bis R6 den Zwischenkreis 8 belasten würde. Während der drehfeldbildenden Zustände ist der Hochsetzsteller 18 inaktiv, und der Zwischenkreiskondensator C_{Zk} versorgt dann den Motor über die eingeschalteten Schalter T7 und T8.

Durch die beschriebene erfindungsgemäße Ausgestaltung kann vorteilhafterweise das Hochsetzstellen unabhängig von der regulären Drehfelderzeugung eingesetzt werden, um die Zwischenkreisspannung über einen kritischen Wert hinaus zu erhöhen und dabei die Welligkeit der Zwischenkreisspannung bei verminderten Reaktanzen im Zwischenkreis zu reduzieren.

In einer Weiterbildung der Erfindung können die Wickelkopf-Streuinduktivitäten "künstlich" beeinflusst, und zwar verkleinert oder vergrößert werden, indem beispielsweise Ferritelemente (Bleche) im Wickelkopfbereich angeordnet, z. B. radial eingeschoben werden. Einige Beispiele für Maßnahmen zur Beeinflussung der Streuinduktivitäten werden anhand der Fig. 12 bis 23 erläutert.

In den Fig. 12 bis 23 ist jeweils ein Stator 30 des Elektromotors 2 veranschaulicht. Der Stator 30 besteht in üblicher Weise aus einem ferromagnetischen Statorkern 32, der in aller Regel als Blechpaket ausgeführt ist, und in Statornuten gewickelten Motorwicklungen 34, die außerhalb des Statorkerns 32 über dessen Stirnseiten geführte Wickelköpfe bilden. Diese Bereiche der Motorwicklungen 34 erzeugen die besagten Wickelkopf-Streuinduktivitäten.

Da bei der erfindungsgemäßen Nutzung der Wickelköpfe der Rotorwicklungen 34 als Induktivität für den Hochsetzsteller 18 alle Stränge an ihren Anfängen und Enden kurzgeschlossen sind, werden alle Stränge von einem annähernd gleichen Strom durchflossen. Somit ergibt sich eine Kompensation der Felder im ferromagnetischen Statorkern 32, und es treten lediglich die Streuinduktivitäten der Wickelköpfe der Stränge - parallelgeschaltet - nach außen als resultierende Induktivität für den Hochsetzsteller 18 auf. Für einen ordnungsgemäßen Betrieb des Hochsetzstellers 18 in den Zeitintervallen des Raumzeigerzustandes R7 (oberer Nullzeiger) ist es aber vorteilhaft, wenn sich die resultierende Induktivität innerhalb gewisser Grenzen befindet, um einen genügend großen Energiedurchsatz und damit mögliche Abgabeleistungen zu erhalten. Im Folgenden werden einige Möglichkeiten erläutert, die Streuinduktivitäten, welche je nach Auslegung des Stators 30 und der Motorwicklungen 34 variieren können, zu beeinflussen.

Wie sich zunächst aus Fig. 12 und 13 ergibt, kann der Stator 30 zumindest auf einer seiner zwei axial gegenüberliegenden Wickelkopf-Seiten einen den Wickelkopf-Bereich überdeckenden, ringscheibenförmigen Kompensationsring 36 aus einem Material mit hoher magnetischer Permeabilität aufweisen. Dieser Kompensationsring 36 bildet somit ein weichmagnetisches Rückschlusselement. Im dargestellten Beispiel weist der Stator 30 auf beiden Axialseiten jeweils einen solchen Kompensationsring 36 auf. Durch den/jeden Kompensationsring 36 wird eine Kompensation der Streuflüsse bei gleichgerichteten Strömen in allen Strängen erreicht (ähnlich der Kompensation im Inneren des Statorkerns 32), so dass die resultierende Induktivität verringert wird.

In dem weiteren Ausführungsbeispiel gemäß Fig. 14 bis 17 ist - ebenfalls zumindest auf einer der axial gegenüberliegenden Wickelkopf-Seiten - zusätzlich der Stator 30 zwischen den Motorwicklungen 34 mit einem Füllmaterial von hoher magnetischer Permeabilität versehen, beispielsweise vergossen oder umspritzt. Es kann sich um ein beispielsweise mit Eisenpulver (Ferritpulver) versetztes Gießharz handeln. Hierdurch können unmittelbar Kompensationsringe 36a spritz- bzw. formtechnisch gebildet (angeformt) werden, auch wenn diese in Fig. 15 und 17 gesondert dargestellt sind. Durch diese "Umfüllung" des bewickelten Statorkerns 32 wird eine verbesserte Passung zwischen den Motorwicklungen 34 und dem magnetisch permeablen Material erreicht, so dass Luftspalte minimiert werden. Dadurch wird ein wesentlich stärkerer Effekt der Kompensation erzielt, so dass die resultierende Induktivität L noch stärker reduziert werden kann.

Alternativ zu den bisher erläuterten Maßnahmen kann auch eine Erhöhung der Streuinduktivitäten erreicht werden. Dazu wird auf die Fig. 18 bis 23 verwiesen, wonach der Stator 30 - wiederum zumindest auf einer seiner zwei axial gegenüberliegenden Wickelkopf-Seiten -jeweils axial zwischen der/jeder Motorwicklung 34 und dem ferromagnetischen Statorkern 32 Einfügeteile 38 aus einem Material von hoher oder niedriger magnetischer Permeabilität aufweist. Durch diese Maßnahme wird durch einen vergrößerten (magnetischen) Abstand zwischen der jeweiligen Wicklung 34 und dem Statorkern 32 eine verstärkte Ausbildung von Streuflüssen (d. h. von Flüssen, welche sich bei gleichgerichteten Strömen in den Strängen nicht kompensieren) bewirkt. Je nach magnetischer Permeabilität des verwendeten Materials für die Einfügeteile 38 kann der auftretende magnetische Streufluss noch vergrößert werden (größere Permeabilität bewirkt einen größeren magnetischen Streufluss), da ein Teil der Länge der magnetischen Streufeldlinien durch ein Material von höherer Permeabilität als Luft verläuft.

In weiterer Ausgestaltung dieser Maßnahme kann gemäß Fig. 20 bis 23 vorgesehen sein, dass die Einfügeteile 38 als magnetisch geschlossene, die einzelnen Motorwicklungen 34 im Wickelkopf-Bereich radial und axial umschließende Ringe ausgebildet sind. Dies kann beispielsweise erreicht werden, indem verlängerte Blechstreifen jeweils zwischen Wicklung 34 und Statorkern 32 angeordnet werden. Die verlängerten Enden werden dann um den Wickelkopf geführt und oberhalb der Wicklung zusammengebogen, um einen magnetisch geschlossenen Ring zu bilden. Dadurch wird das Streufeld in diesem Ring geführt. Durch die erhöhte Permeabilität des Materials wird der Streufluss vergrößert und somit die resultierende Induktivität erhöht. Durch die Bildung eines geschlossenen, magnetisch permeablen Ringes wird ein stärkerer Effekt der Induktionserhöhung als durch ausschließliche Abstandsvergrößerung bzw. Einbringung von magnetisch permeablem Material in den entstehenden Spalt erreicht.

Schließlich kann - alternativ oder zusätzlich zu den bisher beschriebenen Maßnahmen - eine Beeinflussung der Streuinduktivitäten der Wickelköpfe auch durch spezielle Auslegung der Geometrie der Wicklung selbst erreicht werden. Dazu wird auf Fig. 24 bis 27 verwiesen. Durch eine gezielte Gestaltung der Wickelköpfe, d. h. eines Wickelkörpers 40 und/oder der aufgebrachten Wicklung 34, soll eine Beeinflussung der ausgebildeten Streuflüsse, d. h. der Flüsse, welche sich bei gleichgerichteten Strömen in den Strängen nicht kompensieren, erreicht werden. So kann der Wickelkörper 40 als Träger der Wicklung 34 eine spezielle Form erhalten, was zu einer Veränderung der Wicklungsgeometrie und/oder zu einer Veränderung der Abstände zwischen ferromagnetischem Statorkern 32 und den einzelnen Windungen der Bewicklung 34 führt. Folglich wird die Ausbildung der Streuflüsse und der Wirkung als Streuinduktivität beeinflusst. Außerdem kann die Form der Bewicklung 34, bei gleicher Form des Wickelkörpers 40, verändert werden und somit eine Variation der Streuinduktivität erfolgen. Einige beispielhafte Veränderungen sind in den Fig. 24 bis 27 dargestellt. Fig. 24 zeigt hierbei eine Veränderung des Wickelkörpers 40 mit einer daraus resultierenden Veränderung von Wicklungsgeometrie und Abstand zum ferromagnetischen Statorkern 32. Die Fig. 25 bis 27 zeigen mögliche Veränderungen der Form der Bewicklung 34 bei gleichem Wickelkörper 40, z. B. mit gerader, senkrecht zu einer Motorachse verlaufender Außenkontur 42 (Fig. 25), mit schräg radial nach innen oder außen abfallender Außenkontur 44 (Fig. 26) und/oder mit einer gestuften Außenkontur 46 (Fig. 27).

Abschließend wird bemerkt, dass alle anhand der Figuren 12 bis 27 beschriebenen Maßnahmen sowohl einzeln als auch in beliebigen bzw. sinnvollen Kombinationen angewendet werden können.

Die Erfindung ist nicht auf die dargestellten und beschriebenen Ausführungsbeispiele beschränkt, sondern umfasst auch alle im Sinne der Erfindung gleichwirkenden Ausführungen. Ferner ist die Erfindung bislang auch noch nicht auf die im jeweiligen unabhängigen Anspruch definierte Merkmalskombination beschränkt, sondern kann auch durch jede beliebige andere Kombination von bestimmten Merkmalen aller insgesamt offenbarten Einzelmerkmalen definiert sein. Dies bedeutet, dass grundsätzlich praktisch jedes Einzelmerkmal des jeweiligen unabhängigen Anspruchs weggelassen bzw. durch mindestens ein an anderer Stelle der Anmeldung offenbartes Einzelmerkmal ersetzt werden kann. Insofern sind die Ansprüche lediglich als ein erster Formulierungsversuch für eine Erfindung zu verstehen.

## Patentansprüche

1. Verfahren zum Ansteuern eines bürstenlosen, elektronisch kommutierten, dreisträngigen Elektromotors (2), wobei eine Netzwechselspannung (U_{N}) gleichgerichtet und über einen schlanken Zwischenkreis (8) mit minimaler Zwischenkreis-Reaktanz als Zwischenkreisspannung (U_{Z}) einem Wechselrichter (10) zugeführt wird, der zur Speisung und Kommutierung des Elektromotors (2) ansteuerbar ist, **dadurch gekennzeichnet, dass** eine zunächst durch Gleichrichten der Netzwechselspannung (U_{N}) erzeugte, pulsierende Gleichspannung (U_{G}) derart bezüglich ihrer Augenblickswerte dynamisch erhöht wird, dass die daraus resultierende Zwischenkreisspannung (U_{Z}) über ihren zeitlichen Verlauf hinweg mit reduzierter Welligkeit stets oberhalb einer bestimmten Grenzspannung (U₁/U₂) liegt, wobei die pulsierende Gleichspannung (U_{G}) unter Verwendung eines Hochsetzstellers (18) in die Zwischenkreisspannung (U_{Z}) umgesetzt wird, wobei die pulsierende Gleichspannung (U_{G}) mit einem anhand der jeweils aktuellen Zwischenkreisspannung (U_{Z}) geregelten Taktverhältnis getaktet auf eine Induktivität (L) geschaltet wird, wobei über eine der Induktivität (L) nachgeschaltete Freilaufdiode (D) und einen Zwischenkreiskondensator (C_{Zk}) die Zwischenkreisspannung (U_{Z}) aufsummiert wird, und wobei als Induktivität (L) für den Hochsetzsteller (18) im Elektromotor (2) vorhandene Streuinduktivitäten (Ls1 - Ls3) von Motor-Wickelköpfen genutzt werden, wobei ein Hochsetzsteller-Betrieb nur in Phasen der Kommutierungssteuerung des Wechselrichters (10) durchgeführt wird, in denen alle Wicklungen (U, V, W) des Elektromotors (2) kurzgeschlossen sind, und wobei in den übrigen, verbleibenden Phasen der Kommutierung eine übliche Ansteuerung der Wicklungen (U, V, W) zur Drehmomenterzeugung erfolgt.

2. Verfahren nach Anspruch 1,
**dadurch gekennzeichnet, dass** die jeweils aktuelle Zwischenkreisspannung (U_{Z}) als Ist-Wert einem Spannungsregler (20) zugeführt wird, der einen elektronischen Schalter (T9) zur Taktung der Induktivität (L) des Hochsetzstellers (18) in Abhängigkeit vom Ist-Wert der Zwischenkreisspannung (U_{Z}) und von der vorbestimmten Grenzspannung (U₁/U₂) pulsweitenmoduliert ansteuert.

3. Verfahren nach Anspruch 1 oder 2,
**dadurch gekennzeichnet, dass** die Streuinduktivitäten (Ls1 - Ls3) der Motor-Wickelköpfe durch zusätzliche Maßnahmen hinsichtlich ihrer wirksamen Induktivität (L) beeinflusst, und zwar verringert oder erhöht werden.

4. Steuersystem für einen bürstenlosen, elektronisch kommutierten, dreisträngigen Elektromotor (2), insbesondere unter Anwendung des Verfahrens nach einem der vorhergehenden Ansprüche, mit einem Netzgleichrichter (6), einem nachgeschalteten schlanken Zwischenkreis (8) mit minimaler Zwischenkreis-Reaktanz sowie mit einem über den Zwischenkreis gespeisten und zur Kommutierung des Elektromotors (2) ansteuerbaren Wechselrichter (10),
**gekennzeichnet durch** einen integrierten Hochsetzsteller (18) mit einer derart ausgelegten Steuerung (20), dass eine über den Netzgleichrichter (6) gleichgerichtete, pulsierende Gleichspannung (U_{G}) bezüglich ihrer Augenblickswerte derart dynamisch erhöht wird, dass eine daraus resultierende Zwischenkreisspannung (U_{Z}) über ihren zeitlichen Verlauf hinweg mit reduzierter Welligkeit stets oberhalb einer bestimmten Grenzspannung (U₁/U₂) liegt, wobei der Hochsetzsteller (18) eine Induktivität (L) in Reihe mit einer Freilaufdiode (D) und mit einem nachgeschalteten Zwischenkreis-Kondensator (C_{Zk}) aufweist, wobei die Induktivität (L) über einen steuerbaren elektronischen Schalter (T9) getaktet mit der pulsierenden Gleichspannung (U_{G}) beaufschlagbar ist, wobei die Induktivität (L) von im Elektromotor (2) vorhandenen Streuinduktivitäten (Ls1 - Ls3) von Motor-Wickelköpfen gebildet ist und die Steuerung (20) den Hochsetzsteller (18) nur in Phasen der Kommutierung aktiviert, in denen alle Wicklungen (U, V, W) des Elektromotors (2) kurzgeschlossen sind.

5. Steuersystem nach Anspruch 4,
**gekennzeichnet durch** einen Spannungsregler (20), der in Abhängigkeit von der jeweils aktuellen Zwischenkreisspannung (U_{Z}) sowie in Abhängigkeit von der vorbestimmten Grenzspannung (U₁/U₂) den elektronischen Schalter (T9) zur Taktung der Induktivität (L) mit einem variablen Taktverhältnis pulsweitenmoduliert ansteuert.

6. Steuersystem nach Anspruch 4 oder 5,
**gekennzeichnet durch** zusätzliche, im Wickelkopf-Bereich des Elektromotors (2) angeordnete Mittel zur Beeinflussung der wirksamen Induktivität (L) der Wickelkopf-Streuinduktivitäten (Ls1 - Ls3).

7. Steuersystem nach Anspruch 6,
**dadurch gekennzeichnet, dass** der Elektromotor (2) zumindest auf einer seiner zwei axial gegenüberliegenden Wickelkopf-Seiten einen den Wickelkopf-Bereich überdeckenden Kompensationsring (36) aus einem Material mit hoher magnetischer Permeabilität aufweist.

8. Steuersystem nach Anspruch 6 oder 7,
**dadurch gekennzeichnet, dass** der Elektromotor (2) zumindest auf einer seiner zwei axial gegenüberliegenden Wickelkopf-Seiten zwischen den Motorwicklungen (34) mit einem Füllmaterial von hoher magnetischer Permeabilität versehen ist.

9. Steuersystem nach einem der Ansprüche 6 bis 8,
**dadurch gekennzeichnet, dass** der Elektromotor (2) zumindest auf einer seiner zwei axial gegenüberliegenden Wickelkopf-Seiten jeweils axial zwischen der Motorwicklung (34) und einem ferromagnetischen Statorkern (32) Einfügeteile (38) aus einem Material von hoher oder niedriger magnetischer Permeabilität aufweist.

10. Steuersystem nach Anspruch 9,
**dadurch gekennzeichnet, dass** die Einfügeteile (38) als magnetisch geschlossene, die einzelnen Motorwicklungen (34) im Wickelkopf-Bereich umschließende Ringe ausgebildet sind.

11. Steuersystem nach einem der Ansprüche 4 bis 10,
**gekennzeichnet durch** eine geometrische Gestaltung der Motorwicklungen (34) im Wickelkopf-Bereich zur Beeinflussung der wirksamen Induktivität (L) der Wickelkopf-Streuinduktivitäten (Ls1 - Ls3).

## Claims

1. Method for driving a brushless, electronically commutated, three-phase electric motor (2), wherein a line AC voltage (U_{N}) is rectified and fed via a slim DC link (8) with minimum DC link reactance as a DC link voltage (U_{Z}) to an inverter (10) that can be driven to supply and commutate the electric motor (2),
**characterised in that** a pulsating DC voltage (U_{G}) initially generated by rectifying the line AC voltage (U_{N}) is dynamically increased with respect to its instantaneous values in such a manner that the resulting DC link voltage (U_{Z}) with reduced ripple always lies above a defined limit voltage (U₁/U₂) over time, wherein the pulsating DC voltage (U_{G}) is converted using a step-up chopper (18) into the DC link voltage (U_{Z}), wherein the pulsating DC voltage (U_{G}) is connected to an inductor (L) at a pulse duty ratio regulated on the basis of the respective current DC link voltage (U_{Z}), wherein the DC link voltage (U_{Z}) is added up via a freewheeling diode (D) downstream of the inductor (L), and a DC link capacitor (C_{Zk}), and wherein stray inductances (Ls1 - Ls3) of motor winding heads present in the electric motor (2) are used as the inductor (L) for the step-up chopper (18), wherein a step-up chopper operation is performed only in the phases of the commutation control system of the inverter (10) in which all windings (U, V, W) of the electric motor (2) are short-circuited, and wherein ordinary driving of the windings (U, V, W) for generating torque takes place in the other remaining phases of the commutation.

2. Method according to Claim 1,
**characterised in that** the respective current DC link voltage (U_{Z}) is supplied as an actual value to a voltage regulator (20) that drives an electronic switch (T9) for clocking the inductor (L) of the step-up chopper (18) as a function of the actual value of the DC link voltage (U_{Z}) and of the predetermined limit voltage (U₁/U₂), using pulse-width modulation.

3. Method according to Claim 1 or 2,
**characterised in that** the stray inductances (Ls1 - Ls3) of the motor winding heads are influenced, specifically, reduced or increased, by additional measures with respect to their effective inductance (L).

4. Control system for a brushless, electronically commutated, three-phase electric motor (2), in particular using the method according to one of the preceding claims, comprising a network rectifier (6), a downstream slim DC link (8) with minimum DC link reactance and a controllable inverter (10) that can be supplied via the DC link and driven to commutate the electric motor (2),
**characterised by** an integrated step-up chopper (18) with a controller (20) designed in such a manner that a pulsating DC voltage (U_{G}) rectified by the network rectifier (6) is dynamically increased with respect to its instantaneous values in such a manner that a resulting DC link voltage (U_{Z}) with reduced ripple always lies above a defined limit voltage (U₁/U₂) over time, wherein the step-up chopper (18) has an inductor (L) in series with a freewheeling diode (D) and a downstream DC link capacitor (C_{Zk}), wherein the inductor (L) can be subjected, clocked by a controllable electronic switch (T9), to the pulsating DC voltage (U_{G}), wherein the inductor (L) is formed from stray inductances (Ls1 - Ls3) of motor winding heads present in the electric motor (2), and the controller (20) activates the step-up chopper (18) only in the phases of commutation in which all windings (U, V, W) of the electric motor (2) are short-circuited.

5. Control system according to Claim 4,
**characterised by** a voltage regulator (20) which, as a function of the respective current DC link voltage (U_{Z}) and as a function of the predetermined limit voltage (U₁/U₂), drives the electronic switch (T9) using pulse width modulation to clock the inductor (L) at a variable pulse duty ratio.

6. Control system according to Claim 4 or 5,
**characterised by** additional means for influencing the effective inductance (L) of the stray inductances (Ls1 - Ls3) of the winding heads arranged in the winding head area of the electric motor (2).

7. Control system according to Claim 6,
**characterised in that** at least on one of its two axially opposite winding head sides, the electric motor (2) has a compensation ring (36) made of a material with high magnetic permeability that covers the winding head area.

8. Control system according to Claim 6 or 7,
**characterised in that** at least on one of its two axially opposite winding head sides, the electric motor (2) is provided with a filling material with high magnetic permeability between the motor windings (34).

9. Control system according to one of Claims 6 to 8, **characterised in that** at least on one of its two axially opposite winding head sides, the electric motor (2) has insertion parts (38) made of a material with high or low magnetic permeability in each case axially between the motor winding (34) and a ferromagnetic stator core (32).

10. Control system according to Claim 9,
**characterised in that** the insertion parts (38) are configured as magnetically closed rings enclosing the individual motor windings (34) in the winding head area.

11. Control system according to one of Claims 4 to 10, **characterised by** a geometrical design of the motor windings (34) in the winding head area for influencing the effective inductance (L) of the stray inductances (Ls1 - Ls3) of the winding heads.

## Revendications

1. Procédé pour commander un moteur électrique (2) sans balais à trois phases, commuté électroniquement, une tension alternative du réseau (U_{N}) étant redressée et acheminée, via un circuit intermédiaire (8) allongé avec une réactance minimale, sous forme de tension de circuit intermédiaire (U_{Z}) vers un onduleur (10) qui peut être commandé pour alimenter et commuter le moteur électrique (2), **caractérisé en ce qu'**une tension continue (U_{G}) pulsée, générée d'abord par redressement de la tension alternative du réseau (U_{N}) est augmentée dynamiquement par rapport à ses valeurs momentanées, de telle sorte que la tension de circuit intermédiaire (U_{Z}) en résultant se situe, sur toute son évolution en fonction du temps, avec une ondulation réduite toujours au-dessus d'une tension limite (U₁/U₂) déterminée, la tension continue (U_{G}) pulsée étant transformée en tension de circuit intermédiaire (U_{Z}) moyennant l'utilisation d'un incrémenteur (18), la tension continue (U_{G}) pulsée étant commutée de manière cadencée sur une inductance (L) avec un rapport de cadence régulé à l'appui de la tension de circuit intermédiaire (U_{Z}) respectivement actuelle, la tension de circuit intermédiaire (U_{Z}) étant totalisée par une diode de marche à vide (D), montée en aval de l'inductance (L), et par un condensateur de circuit intermédiaire (C_{ZK}), et des inductances de fuite (Ls1 - Ls3), présentes dans le moteur électrique (2) en tant qu'inductance (L) pour l'incrémenteur (18), étant utilisées par les têtes de bobine du moteur, un fonctionnement avec incrémenteur étant effectué uniquement dans les phases de la commande de commutation de l'onduleur (10), dans lesquelles toutes les bobines (U, V, W) du moteur électrique (2) sont court-circuitées, et une commande usuelle des bobines (U, V, W) pour générer un couple de rotation étant effectuée dans les autres phases restantes de la commutation.

2. Procédé selon la revendication 1, **caractérisé en ce que** la tension de circuit intermédiaire (U_{Z}) respectivement actuelle est acheminée en tant que valeur réelle vers un régulateur de tension (20) qui commande avec une modulation d'impulsion en largeur un commutateur électronique (T9) pour cadencer l'inductance (L) de l'incrémenteur (18) en fonction de la valeur réelle de la tension de circuit intermédiaire (U_{Z}) et de la tension limite (U₁/U₂) prédéterminée.

3. Procédé selon la revendication 1 ou 2, **caractérisé en ce que** les inductances de fuite (Ls1 - Ls3) des têtes de bobine du moteur sont influencées, à savoir en diminution ou en augmentation, dans leur inductance (L) active par des mesures supplémentaires.

4. Système de commande pour un moteur électrique (2) sans balais à trois phases, commuté électroniquement, en particulier moyennant l'utilisation du procédé selon l'une quelconque des revendications précédentes, comportant un redresseur de secteur (6), un circuit intermédiaire (8) allongé monté en aval de ce dernier avec une réactance minimale du circuit intermédiaire, et comportant un onduleur (10) alimenté par le circuit intermédiaire et pouvant être commandé pour commuter le moteur électrique (2),
**caractérisé par** un incrémenteur (18) intégré avec une commande (20) configurée de telle sorte qu'une tension continue (U_{G}) pulsée, redressée par le redresseur de secteur (6) est augmentée dynamiquement par rapport à ses valeurs momentanées, de telle sorte que la tension de circuit intermédiaire (U_{Z}) en résultant se situe, sur toute son évolution en fonction du temps, avec une ondulation réduite toujours au-dessus d'une tension limite (U₁/U₂) déterminée, l'incrémenteur (18) comportant une inductance (L) montée en série avec une diode de marche à vide (D) et avec un condensateur de circuit intermédiaire (C_{ZK}), monté en aval de cette dernière, l'inductance (L) recevant la tension continue (U_{G}) pulsée de manière cadencée par l'intermédiaire d'un commutateur électronique (T9), l'inductance (L) étant formée par des inductances de fuite (Ls1 - Ls3), présentes dans le moteur électrique (2), des têtes de bobine du moteur, et la commande (20) activant l'incrémenteur (18) uniquement dans les phases de la commutation, dans lesquelles toutes les bobines (U, V, W) du moteur électrique (2) sont court-circuitées.

5. Système de commande selon la revendication 4, **caractérisé par** un régulateur de tension (20) qui, en fonction de la tension de circuit intermédiaire (U_{Z}) respectivement actuelle et en fonction de la tension limite (U₁/U₂) prédéterminée, commande avec une modulation d'impulsion en largeur le commutateur électronique (T9) pour cadencer l'inductance (L) avec un rapport de cadence variable.

6. Système de commande selon la revendication 4 ou 5, **caractérisé par** des moyens supplémentaires, disposés dans la zone des têtes de bobine du moteur électrique (2) et destinés à influencer l'inductance (L) active des inductances de fuite (Ls1 - Ls3) des têtes de bobine.

7. Système de commande selon la revendication 6, **caractérisé en ce que** le moteur électrique (2) comporte, au moins sur un de ses deux côtés axialement opposés avec les têtes de bobine, une bague de compensation (36), recouvrant la zone des têtes de bobine et réalisée dans un matériau avec une perméabilité magnétique élevée.

8. Système de commande selon la revendication 6 ou 7, **caractérisé en ce que** le moteur électrique (2), au moins sur un de ses deux côtés axialement opposés avec les têtes de bobine, contient entre les bobines (34) du moteur un matériau de remplissage avec une perméabilité magnétique élevée.

9. Système de commande selon l'une quelconque des revendications 6 à 8, **caractérisé en ce que** le moteur électrique (2), au moins sur un de ses deux côtés axialement opposés avec les têtes de bobine, comporte, dans chaque cas, de façon axiale entre la bobine (34) du moteur et un noyau de stator (32) ferromagnétique, des éléments d'insertion (38) réalisés dans un matériau avec une perméabilité magnétique élevée ou faible.

10. Système de commande selon la revendication 9, **caractérisé en ce que** les éléments d'insertion (38) sont réalisés sous forme d'anneaux magnétiquement fermés entourant les différentes bobines (34) du moteur dans la zone des têtes de bobine.

11. Système de commande selon l'une quelconque des revendications 4 à 10, **caractérisé par** une configuration géométrique des bobines (34) du moteur dans la zone des têtes de bobine pour influencer l'inductance(L) active des inductances de fuite (Ls1 - Ls3) des têtes de bobine.
